# EUROPEAN PATENT APPLICATION

(11) **EP 2 354 185 A1**
(43) Date of publication of application: **10.08.2011**
(21) Application number: 10152947.7
(22) Date of filing: 08.02.2010
(51) Int. Cl.: C08L 51/04, C08L 55/02, C08K 3/00

(54) **POLYMER COMPOSITION**

(71) Applicant: Mitsubishi Chemical Europe GmbH, 40549 Düsseldorf (DE)
(72) Inventor: Gijsman, Pieter, 6191 NM Beek (NL); Schrauwen, Bernardus Antonius Gerardus, 6029 RN Sterksel (NL)
(74) Representative: HOFFMANN EITLE

(57) **Abstract**

The present invention relates to a thermoplastic composition comprising a butadiene containing polymer and a copper containing laser direct structuring additive, wherein the composition further comprises an antioxidant and the weight ratio of antioxidant to polymerised butadiene is at least 0,01:1

## Description

The present invention relates to a thermoplastic composition comprising a butadiene containing polymer and a copper containing additive, in particular a copper containing laser direct structuring additive. The invention also relates to a moulded part containing this composition, to a circuit carrier containing such moulded part, to a process for producing such circuit carrier and to the use of an antioxidant in such a composition.

Thermoplastic compositions comprising a polymer and a laser direct structuring (LDS) additive which additive is capable of being activated by laser radiation and thereby forming elemental metal nuclei, are for example described in US-B2-7060421, WO-A-2009024496 and US2009/0292048. Such polymer compositions can advantageously be used in a LDS process for producing a non-conductive part on which conductive tracks are to be formed by irradiating areas of said part with laser radiation to activate the plastic surface at locations where the conductive path is to be situated and break down the laser direct structuring additive(s) and release metal nuclei, and subsequently metalizing the irradiated areas to accumulate metal on these areas.

Thermoplastic compositions are usually formed in an extruder. The extruder is generally operated at a temperature higher than that necessary to cause the composition to flow. The extrudate is usually quenched and then pelletized into granulates. Such granulates may be used for subsequent molding, shaping or forming and are usually transported and/or stored for a shorter or longer period of time. During such storing and/or transporting, the granulates may absorb water from the environment. The presence of water may lead to surface-streaked parts. In order to release the granulate from absorbed water, thorough drying is usually done just prior to processing the polymer granulates into the desired parts.

Also compositions containing polycarbonate and butadiene containing polymers, such as for example ABS, absorb water from the environment in case the granulates are not packed in moisture-tight packaging. Appropriate drying of such compositions, also when stored for a prolonged period of time, prior to processing results in that the formation of surface streaks caused by the presence of excess moisture can be avoided.

It has now been found that after prolonged storage, for example storing for at least 6 months, of a thermoplastic composition containing butadiene containing polymer as well as copper containing laser direct structuring additive in a packaging that is not moisture tight, drying of the stored composition does not result in the expected reduction of the water content. Furthermore, even after extensive drying, the water content cannot be reduced to a level acceptable for processing. Thus, after a prolonged storage time in a packaging that is not moisture-tight, drying of the stored composition cannot prevent the formation of surface streaks caused by the excess moisture that is still present in the composition to be processed.

The object of the present invention is being able to prolonge the storage time of a thermoplastic composition comprising butadiene containing polymer and a copper containing laser direct structuring additive, after which drying of the stored composition allows to reduce the water content to such an extent that formation of surface streaks, that would be caused by the presence of excess moisture in the composition to be processed, can be avoided.

This object is achieved in that the thermoplastic composition further comprises an antioxidant and the weight ratio of antioxidant to polymerised butadiene is at least 0,01:1.

It has now surprisingly been found that the presence of an antioxidant in a thermoplastic composition comprising butadiene containing polymer and a copper containing laser direct structuring additive results in that the storage time in a packaging that is not moisture-tight can be increased, while standard drying of the stored composition allows to reduce the water content to such an extent that formation of surface streaks, that would be caused by the presence of excess moisture in the composition to be processed, can be avoided. Standard drying corresponds with the drying time and the drying conditions needed to reduce the water content in a similar composition comprising butadiene containing polymer but not a copper containing laser direct structuring additive, to such an extent that formation of surface streaks, that would be caused by the presence of excess moisture in the composition to be processed, can be avoided.

Accordingly the present invention relates to a thermoplastic composition comprising a butadiene containing polymer and a copper containing laser direct structuring additive, wherein the composition further comprises an antioxidant and the weight ratio of antioxidant to polymerised butadiene is at least 0,01:1.

The present invention also relates to the use of an antioxidant in a thermoplastic composition comprising a butadiene containing polymer and a copper containing laser direct structuring additive for increasing the storage time of the composition in a packaging that is not water-tight, while drying of the stored composition still allows to reduce the water content to such an extent that formation of surface streaks, that would be caused by the presence of excess moisture in the composition to be processed, can be avoided

US2009/0292048 discloses in the experimental part compositions comprising polycarbonate, ABS (a butadiene containing polymer), copper containing laser direct structuring additive and a customary amount of antioxidant. The amount of ABS is not described. Thus the amount of antioxidant relative to the amount of polymerised butadiene in the composition cannot be derived. US2009/0292048 also does not teach that the use of an antioxidant in a thermoplastic composition comprising a thermoplastic resin, a butadiene containing polymer and a laser direct structuring would result in that the storage time can be increased, while drying of the stored composition still allows to reduce the water content to such an extent that formation of surface streaks, that would be caused by the presence of excess moisture in the composition to be processed, can be avoided.

The weight ratio of antioxidant to polymerised butadiene is preferably at least 0,02, more preferably at least 0,03 and even more preferably at least 0,04 and even more preferably at least 0,045 to further increase the storage time while drying of the stored composition still allows to reduce the water content to such an extent that formation of surface streaks, that would be caused by the presence of excess moisture in the composition to be processed, can be avoided.

The weight ratio of antioxidant to polymerised butadiene is preferably at most 5, more preferably at most 3 and even more preferably at most 1.

As used herein, a butadiene containing polymer is a polymer formed by polymerisation of butadiene monomer and optionally other monomers. As such, a butadiene containing polymer contains polymerised butadiene having structural units according to

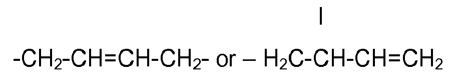

These polymers include homopolymers of butadiene, random and block copolymers of butadiene with one or more monomers illustrated by acrylonitrile, styrene, methyl methacrylate. Examples of butadiene containing polymers include butadiene based rubbers like polybutadiene, styrene-butadiene random copolymer and block copolymer, acrylonitrile-butadiene copolymer and butadiene-isoprene copolymer; acrylate based rubbers like acrylate ester-butadiene copolymers.

In a preferred embodiment of the invention, the butadiene containing polymer is one or more graft copolymer of
c.1.) 5 to 90 parts by weight, preferably 20 to 90 parts by weight, based on c), of a mixture of
c.1.1) 50 to 95% by weight styrene, α-methyl styrene, nucleus-substituted styrene, methyl methacrylate or mixtures thereof, and
c.1.2) 50 to 5% by weight (meth)acrylonitrile, methyl methacrylate, n-butyl acrylate, t-butyl (meth)acrylate or mixtures thereof, on
c.2) 95 to 10 parts by weight, preferably 80 to 10 parts by weight, based on the butadiene containing polymer, of a butadiene based rubber. Particularly preferred graft copolymers are ABS resin (acrylonitrile-butadiene-styrene copolymer) and MBS (methyl methacrylate butadiene styrene copolymer) or a mixture of these copolymers, because of the high compatibility between in particular a polycarbonate matrix and such copolymers, thereby enabling that these copolymers can be uniformly dispersed into the polycarbonate matrix. From an economic point of view is acrylonitrile butadiene styrene (ABS) even more preferred. Any commercially available ABS may be applied. Particularly preferred acrylonitrile butadiene styrene (ABS) is acrylonitrile butadiene styrene with a rubber content of 10 to 50 parts by weight, preferably 10 to 40 parts by weight and even more preferably 10 to 30 parts by weight.

The concentration of butadiene containing polymers in the composition of the present invention may range from 1 up to 95 wt.%. The thermoplastic composition preferably further comprises a thermoplastic resin not being a butadiene containing polymer. In case the thermoplastic composition further comprises such a thermoplastic resin, the concentration of butadiene containing polymers in the composition is usually from 1 up to 60 wt.% and typically from 5 up to 50 wt.%. The amount as given is relative to the total thermoplastic composition.

In case the thermoplastic composition further comprises a thermoplastic resin not being a butadiene containing polymer, the concentration of thermoplastic resin in the composition of the present invention may range from 30 up to 97 wt.%, preferably from 30 up to 90 wt. %. The amount as given is relative to the total thermoplastic composition.

Examples of thermoplastic resins that may be present in the composition according to the invention include, but are not limited to polycarbonate, polyamide, polyester, polyesteramide, polystyrene, polymethyl methacrylate or a combination of such resins.

Examples of suitable polyamides (PA) are aliphatic polyamides, that may eventually be branched polyamides, such as PA6, PA46, PA66, PA6/66, PA 11, PA12, semi aromatic polyamides as MXD6, PA61/6T, PA66/6T, PA4T fully aromatic polyamides and copolymers and blends of the listed polyamides. Examples of suitable polyesters are polyethylene terephtalate (PET), polybutylene terephtalate (PBT), polypropylene terephtalate (PPT), polyethylene naphtanoate (PEN), polybutylene naphtanoate (PBN).Preferred polyesters are polyethylene terephtalate and polybutylene terephtalate.

In a preferred embodiment, the composition comprises aromatic polycarbonate as thermoplastic resin.

Suitable aromatic polycarbonates are polycarbonates made from at least a divalent phenol and a carbonate precursor, for example by means of the commonly known interfacial polymerization process or the melt polymersiation method. Suitable divalent phenols that may be applied are compounds having one or more aromatic rings that contain two hydroxy groups, each of which is directly linked to a carbon atom forming part of an aromatic ring. Examples of such compounds are 4,4'-dihydroxybiphenyl, 2,2-bis(4-hydroxyphenyl)propane (bisphenol A),
2,2-bis(4-hydroxy-3-methylphenyl)propane,
2,2-bis-(3-chloro-4-hydroxyphenyl)-propane,
2,2-bis-(3,5-dimethyl-4-hydroxyphenyl)-propane,
2,4-bis-(4-hydroxyphenyl)-2-methylbutane,
2,4-bis-(3,5-dimethyl-4-hydroxyphenyl)-2-methylbutane,
4,4-bis(4-hydroxyphenyl)heptane, bis-(3,5-dimethyl-4-hydroxyphenyl)-methane,
1,1-bis-(4-hydroxyphenyl)-cyclohexane,
1,1-bis-(3, 5-dimethyl-4-hydroxyphenyl)-cyclohexane,
2,2-(3,5,3',5'-tetrachloro-4,4'-dihydroxydiphenyl)propane,
2,2-(3,5,3',5'-tetrabromo-4,4'-dihydroxydiphenyl)propane,
(3,3'-dichloro-4,4'-dihydroxyphenyl)methane,
bis-(3,5-dimethyl-4-hydroxyphenyl)-sulphon, bis-4-hydroxyphenylsulphon, bis-4-hydroxyphenylsulphide.

The carbonate precursor may be a carbonyl halogenide, a halogen formate or carbonate ester. Examples of carbonyl halogenides are carbonyl chloride and carbonyl bromide. Examples of suitable halogen formates are bis-halogen formates of divalent phenols such as hydroquinone or of glycols such as ethylene glycol. Examples of suitable carbonate esters are diphenyl carbonate, di(chlorophenyl)carbonate, di(bromophenyl)carbonate, di(alkylphenyl)carbonate, phenyltolylcarbonate and the like and mixtures thereof. Although other carbonate precursors may also be used, it is preferred to use the carbonyl halogenides and in particular carbonylchloride, also known as phosgene.

The aromatic polycarbonates in the composition according to the invention may be prepared using a catalyst, an acid acceptor and a compound for controlling the molecular wt..

Examples of catalysts are tertiary amines such as triethylamine, tripropylamine and N,N-dimethylaniline, quaternary ammonium compounds such as tetraethylammoniumbromide and quaternary phosphonium compounds such as methyltriphenylfosfoniumbromide.

Examples of organic acid acceptors are pyridine, triethylamine, dimethylaniline and so forth. Examples of inorganic acid acceptors are hydroxides, carbonates, bicarbonates and phosphates of an alkali metal or earth alkali metal.

Examples of compounds for controlling the molecular wt. are monovalent phenols such as phenol, p-alkylphenols and para-bromophenol and secondary amines.

Such polycarbonates, their preparation and properties are described in detail in for example Encycl. Polym. Sci. Eng., 11, p. 648-718 (Wiley, New York, 1988) and in Kunststoff Handbuch, 3/1, p. 117-297 (Hanser Verlag, Muenchen, 1992).

The composition according to the invention preferably contains a polycarbonate derived from bisphenol A and phosgene and optionally minor amounts of other compounds having one, two or more than two reactive groups as comonomers, for instance for controlling the melt viscosity.

Suitable antioxidants present in the composition according to the invention include primary antioxidants like phenolic antioxidants and aromatic amines. Examples of these primary antioxidants are: 2,6-di-t-butyl-4-methylphenol; 2,6-di-t-butyl-4-ethyl-phenol; benzenepropanoic acid, 3,5-bis(1,1-dimethylethyl)-4-hydroxy-octadecyl ester; 2,2'-methylenebis (6-t-butyl-4-methylphenol); 2,2'-methylenebis 6-(1-methylcyclohexyl)-p-cresol; 4,4'-butylidenebis (6-t-butyl-3-methyl-phenol); bis-(2-t-butyl-4-methyl-6-(3-t-butyl-5-methyl-2-hydroxy-benzyl)-phenyl)-terephtalate; 1,1,3-Tris (2-methyl-4-hydroxy-5-t-butyl phenyl) butane; 1,3,5-Trimethyl-2,4,6-tris (3,5-di-t-butyl-4-hydroxybenzyl) benzene; butyric acid, 3,3-bis(3-t-butyl-4-hydroxyphenyl) ethylene ester; 1,3,5-tris(3',5'-di-t-butyl-4'-hydroxybenzyl)-s-triazine-2,4,6-(1H,3H,5H)trione; 1,3,5-tris (4-t-butyl-2,6-dimethyl-3-hydroxy-bezyl)-iso-cyanurate; 3-(3,5-di-t-butyl-4-hydroxy-phenyl) propion acid ester with 1,3,5-tris (2-hydroxy-ethyl)-iso-cyanurate; tetrakis [methylene (3,5-di-t-butyl-4-hydroxyhydrocinnamate)] methane; N,N'-hexamethylene bis (3,5-di-t-butyl-4-hydroxyhydrocinnamamide; 1,2-bis (3,5-di-t-butyl-4-hydroxyhydrocinnamoyl) hydrazine; 3,9-bis(1,1-dimethyl-2-(P-(3-t-butyl-4-hydroxy-5-methyl-phenyl)-propyonyl-oxy)-ethyl)-2,4,8,10-tetraoxospiro; 2,2'-ethylidenebis (4,6-dit-butylphenol); 4,4'-methylenebis (2,6-di-t-butylphenol); tri-ethylene-glycol-bis-3-(t-butyl-4-hydroxy-5-methyl-phenyl)-propionate; 1,6-hexane-diol-bis-3-(3,5-di-t-butyl-4-hydroxyphenyl)-propionate; butylated hydroxyanisole; 2,6-di-t-butyl-4-sec-butyl-phenol, [2-propyleneacid, 2-isopentane-6-[(3-isopentane-2-hydroxy-5-isopentane-phenyl)-ethyl]-4- methyl-phenyl-ester]; [2-propylene-acid,2-t-butyl-6-[(3-t-butyl-2-hydroxy-5-methyl-phenyl)-methyl]-4-methyl-phenyl-ester]; 2,2'-oxamido bis-[ethyl 3-(3,5-di-tert-butyl-4-hydroxyphenyl) propionate; p-cresol/dicyclopentadiene butylated reaction product; di-ethyl-ester of 3,5-di-t-butyl-4-hydroxy-benzyl-phosphoric acid; 2,5,7,8-tetramethyl-2-(4',8',12'-tri-methyl-tri-decyl)-6-chromanol; N,N'-1,3-propanediylbis(3,5-di-t-butyl-4-hydroxyhydrocinnamamide; calcium bis[monoethyl(3,5-di-t-butyl-4-hydroxybenzyl)phosphonate; 4,4'-di-cumyl-di-phenyl-amine and 2,2,4-trimethyl-1 ,2-dihydroquinoline polymer.

Another class of suitable antioxidants is the class of the secondary antioxidants like the phosphites and the thioethers. Examples of these secondary antioxidants are: trisnonylphenyl phosphite; tris (2,4-di-t-butylphenyl) phosphite; 2,2-methylene-bis-(4,6-di-tbutyl-phenyl)-octyl-phosphite; 2,2'-ethylidenebis (4,6-di-t-butylphenyl) fluorophosphonite; bis- (2,4-di-tert-butyl-6-methylphenyl) ethyl phosphite; 2,4,6 tri-t-butylphenyl-2-butyl-2-ethyl-1,3-propane-diol-phosphite; distearyl pentaerythritol diphosphite; tetrakis-(2,4-di-tert-butyl-phenyl)-4,4'-bi-phenylene-di-phosphonite; bis- (2,4-di-t-butylphenyl) pentaerythritol diphosphite; bis-(2,6-di-tbutyl-4-methyl-phenyl)-pentaerythritol-di-phosphite; bis-(2,4-dicumylphenyl)-pentaerytritol-diphosphite; 1,3-bis-(diphenylphosphino)-2,2-dimethyl-propane; 2,2',2"-nitrilo triethyl-tris[3,3',5,5'-tetratert-butyl-1,1'-biphenyl-2,2'-diyl]phosphite; dilauryl thiodipropionate; dimyristyl thiodipropionate; distearyl thiodipropionate; distearyl disulfide and pentaerythrityl tetrakis (β-laurylthiopropionate).

In one preferred embodiment of the present invention, the antioxidant present in the composition is a primary antioxidant or a mixture of primary antioxidants. In another embodiment of the present invention, the antioxidant present in the composition is a secondary antioxidant or a mixture of secondary antioxidants. In another preferred embodiment of the present invention, the antioxidant present in the composition is a mixture of at least one primary antioxidant and at least one secondary antioxidant. Suitable primary and secondary antioxidants are listed above.

The thermoplastic composition contains a copper containing additive, in particular a copper containing laser direct structuring additive that enables the composition to be used in a laser direct structuring (LDS) process. In a LDS process, a laser beam exposes the LDS additive to place it at the surface of the thermoplastic resin composition and to release metal nuclei from the LDS additive. As such, the LDS additive is selected such that, upon exposure to a laser beam, metal atoms are activated and exposed and in areas not exposed by the laser beam, no metal atoms are exposed.

The laser direct structuring additive is capable of being activated by laser radiation and thereby forming elemental metal nuclei within the thermoplastic composition. In the present invention, the laser direct structuring additive is a copper-containing (inorganic or organic) compound which as a consequence of absorption of laser radiation liberates metal in elemental form. It is also possible that the radiation is not directly absorbed by the copper-containing compound, but is absorbed by other substances which then transfer the absorbed energy to the copper-containing compound and thus bring about the liberation of elemental metal. The laser radiation may be UV light (wavelength from 100 to 400 nm), visible light (wavelength from 400 to 800 nm), or infrared light (wavelength from 800 to 25 000 nm). Other preferred forms of radiation are X-rays, gamma rays, and particle beams (electron beams, [alpha]-particle beams, and [beta]-particle beams). The laser radiation is preferably infrared light radiation, more preferably with a wavelength of 1064 nm.

The laser direct structuring additive capable of being activated by laser radiation is preferably comprised of electrically non-conductive high-thermal-stability organic or inorganic copper compounds which are preferably insoluble and stable in aqueous acidic or alkaline metalizing baths. Particularly suitable compounds are those which absorb a very large proportion of the light at the wavelength of the incident light. Copper oxides which contain at least two different kinds of cations and have a spinel structure or spinel-related structure, and which remain unchanged in nonirradiated areas of the moulded part that contains the composition of the present invention are particularly suitable. A suitable copper-containing spinel is CuCr₂O₄. Suitable copper-containing spinels are commercially available, an example being PK 3095 from Ferro (DE) or 34E23 or 34E30 from Johnson Matthey (DE). Copper oxides of the formula CuO or Cu₂O are also particularly suitable, and use is preferably made here of nanoparticles, such as NANOARC(R) Copper Oxide from Nanophase Technologies Corporation, Illinois, USA.

Examples of LDS additives useful in the present invention include for example copper containing spinels such as copper chromium oxide spinel and copper molybdenum oxide spinel; copper salts, such as for example copper hydroxide phosphate, copper phosphate and copper sulphate.

The thermoplastic composition according to the invention preferably comprises a copper containing spinel and/or a copper salt as laser direct structuring additive. The thermoplastic composition according to the invention more preferably comprises copper chromium oxide spinel and/or copper molybdenum oxide spinel as laser direct structuring additive.

The concentration of laser direct structuring additive in the composition of the present invention is from 0,5 up to 20 wt.%, preferably from 1 up to 20 wt.%, preferably from 3 up to 10 wt.%, more preferably from 4 up to 10 wt.%, and particularly preferably from 5 up to 10 wt.%. The amount as given is relative to the total composition (being 100 wt.%).

The thermoplastic composition according to the invention may further comprise from 0 up to 25 wt.% of one or more other additives, relative to the total composition. These include the customary additives such as stabilizers against degradation from light, in particular UV light, impact modifiers, processing aids such as release agents and lubricants, colorants such as pigments and dyes, fillers including minerals such as wollastonite or aluminium silicates. Suitable examples of such additives and their customary amounts are stated in the aforementioned Kunststoff Handbuch, 3/1.

The polymer composition may further comprise reinforcing agents, such as glass fibres.

The butadiene containing polymer (component b), laser direct structuring additive (component c) and antioxidant (component d) and optionally the thermoplastic resin (component a) and optionally other additives as described above, and also any other additives and reinforcing agents may be introduced into the thermoplastic resin by means of suitable mixing devices such as single-screw or twin-screw extruders, preferably a twin-screw extruder is used. Preferably, the components b), c) and d) are introduced into the extruder and extruded, then quenched in a water bath and then pelletized. The invention therefore further relates to a process for producing a thermoplastic composition according to the present invention by melt mixing at least components b), c) and d) and optionally component a) and optionally other (particulate) additives and reinforcing agents.

The invention further relates to moulded parts that contains the thermoplastic composition according to the present invention. The invention relates in particular to a moulded part produced by injection moulding of the composition according to the invention. The invention further relates to a process for producing such a moulded part, wherein the process comprises at least the following steps (1) forming the thermoplastic composition according to the present invention in an extruder to from an extrudate, (2) quenching the extrudate, (3) making granulates of quenched extrudate, (4) storing and/or transporting such granulates whereby water is absorbed into the granulates resulting in water containing granulates, (5) drying such water containing granulates to obtain granulates with a water content acceptable for processing and (6) processing such granulates to obtain parts free of surface streaks that would be caused by the presence of excess moisture in the granulates to be processed. The invention further also relates to an article, in particular a circuit carrier, which contains a moulded part produced from the composition according to the invention. In one embodiment, such a circuit carrier is used for producing an antenna.

The invention further relates to a process for producing such a circuit carrier which process comprises the steps of providing a moulded part that contains the thermoplastic composition according to the present invention, irradiating areas of said part on which conductive tracks are to be formed with laser radiation to break down the LDS additive b) and releasing metal nuclei, and subsequently metallizing the irradiated areas. In a preferred embodiment, laser is used to simultaneously release metal nuclei and effect ablation of the part while forming an adhesion-promoting surface. This provides a simple means to achieve excellent adhesive strength of the deposited metallic conductor tracks.. The wavelength of the laser is advantageously 248 nm, 308 nm, 355 nm, 532 nm, 1064 nm or of even 10600 nm. The deposition of further metal onto the metal nuclei generated by laser radiation preferably takes place via plating processes. Said metallizing is preferably perfomed by immersing the moulded part in at least one electroless plating bath to form electrically conductive pathways on the irradiated areas of the moulded part. Non-limiting examples of electroless plating processes are a copper plating process, gold plating process, nickel plating process, silver plating, zinc plating and tin plating.

The invention will now be elucidated with reference to the following examples and comparative experiments.

### Example 1 and Comparative Experiments 1-15

The compositions of Comparative Experiments (CEx) 1-15 and of the Example (Ex 1) were prepared from the components as given in Table 1. In addition different butadiene and non-butadiene containing rubber modifiers were added.

All sample compositions were prepared according the amounts as given in Table 2 to 5. All amounts are in weight percentage. In each of the examples, samples were extruded on a co-rotating twin screw extruder at a temperature of 280°C and the extrudate was granulated.

Water content in the materials was measured according the Karl Fischer method (ISO 15512) at a temperature of 190°C using a Metrohm 737 KF Coulometer.

The collected granulate of the composition in Table 2 (CEx 1) was packed in polyethylene bags and stored in a warehouse at ambient conditions. After a storage period of respectively 2 and 6 months the material was dried in a vacuum oven using standard drying conditions for polycarbonate blends (about 4 hours at about 110°C). Directly after drying, the moisture level of the materials was measured by Karl Fischer method. Since the material that was stored for 6 months still showed a water content that is relatively high, the material was additionally dried for about 20 hours at about 110°C in a vacuum oven and the water content was measured again. Finally the materials were injection molded into Izod bars of 80*10*4 mm using a melt temperature of 260°C. Surface quality was judged by visual checking the presence of streaks and Izod Notched impact strength was measured according to IS0180/1A (results given in Table 2). Surprisingly, even after extensive drying, the moisture level of the material that was stored for 6 months did still not decrease to acceptable levels for processing. As a consequence streaks were visible on the injection molded parts and hydrolysis during processing of the melt caused the impact performance to drastically decrease compared to the material that was only stored for 2 months.

The collected granulate of the compositions in Table 3, 4 and 5 were packed in polyethylene bags and stored in a cabinet under ambient conditions.

Table 3 shows the compositions of the Comparative Experiments CEx 2 to CEx 7. In these experiments the copper chromium oxide spinel is added to polycarbonate and polycarbonate blends with different rubber modifiers. The different materials were stored for about 18 months and subsequently dried for about 6 hours at 120°C in a vacuum oven. Moisture content of the materials was measured directly after drying by Karl Fischer method. Interesting to see is that all materials with a butadiene containing rubber modifier did not dry to acceptable moisture levels for processing (moisture ≤ 0.03%). This experiment shows that the problem (of not being able to sufficiently dry the material after storage) is only applicable to compositions containing a butadiene containing polymer.

Table 4 shows the compositions of Comparative Experiments CEx 8 to CEx 13. In this set of experiments different laser direct structuring additives were added to a composition of polycarbonate and a butadiene containing rubber. CEx 8 is a control sample with no laser direct structuring additive. The materials were stored for about 6 months before they were dried for about 6 hours at 120°C in a vacuum oven. Moisture content was measured directly after drying. For a normal PC-rubber blend material (CEx 8) the applied drying procedure is extensive enough to completely dry the material. However all compositions containing a copper chromium oxide spinel (CEx 9 to CEx 11) did again not properly dry and still contained too much water for processing the material without problems (>0.03%). Interesting to see is that the composition with the copper manganese iron additive (CEx 12) is also not drying properly, whereas the composition with the zinc chromium iron additive (CEx 13) is drying to acceptable low levels. This experiment shows that the problem (of not being able to sufficiently dry the material after storage) is only applicable to compositions containing a copper containing additive.

Table 5 shows the compositions of Example 1 in which antioxidant is added. Comparative Experiments CEx 14 and CEx 15 are control samples with respectively no copper chromium additive and no antioxidant. The granulates of these compositions were kept for 7 days in a climate chamber at 70°C - 62% RH (Relative Humidity) to accelerate ambient storage conditions (typically 20-30°C at 40-60% RH). After the samples were removed from the climate chamber they were dried for about 6 hours at about 100°C in a vacuum oven and the water content was measured directly after drying. The results in Table 5 show that the control sample without the copper chromium additive (CEx 14) had no problems in drying, whereas the control sample with copper chromium additive (CEx 15) did not dry towards an acceptable moisture level below or equal to 0.03%. Apparently the 7 days at increased temperature and relative humidity is a good test to reproduce storage conditions in an accelerated way, since the behavior of CEx 14 & CEx 15 is similar to the behavior found in the tables before. Surprisingly, the sample containing antioxidant (Ex 1) did properly dry after the accelerated storage conditions.

**Table 1**

| **Material** | **Type or Trade name** | **Supplier** |
|---|---|---|
| Polycarbonate (PC) | LVN (ISO 1628/4) =55-59 ml/g | DSM |
| Copper chromium oxide spinel 1 | Black 1G | The Shepherd Color Company |
| Copper chromium oxide spinel 2 | Pigment Black PK 3095 | Ferro GmbH |
| Copper chromium oxide spinel 3 | Black 1922 | Broll Buntpigmente GmbH & Co. KG |
| Copper manganese iron oxide spinel | Pigment Black PK 3061 | Ferro GmbH |
| Zinc chromium iron oxide spinel | Pigment Brown PK 1092 | Ferro GmbH |
| Mold release | Loxiol P861/3.5 | Cognis |
| Anti-oxidant | Irganox 1076 | Ciba |

**Table 2**

| **Sample** | | **CEx1** | |
|---|---|---|---|
| Components | Units | | |
| PC | % | 56.5 | |
| Butadiene containing rubber(s) | % | 35 | |
| CuCr₂O₄ spinel 1 | % | 8 | |
| Mold release | % | 0.5 | |
| Total amount | % | 100 | |
| Polymerized butadiene content* | % | 9 | |
| | | | |

| Properties | | | |
|---|---|---|---|
| Storage time before molding | months | 2 | 6 |
| Moisture after 4 hrs drying at 110°C | % | 0.01 | 0.14 |
| Moisture after 20 hrs drying at 110°C | % | NA | 0.08 |
| Izod Notched 1A (0°C) | kJ/m² | 54 | 4 |
| Streaks visible | | no | Yes |

| | | | |
|---|---|---|---|
| * Weight percentage relative to total composition | | | |

**Table 3**

| **Sample** | | **CEx2** | **CEx3** | **CEx 4** | **CEx 5** | **CEx 6** | **CEx 7** |
|---|---|---|---|---|---|---|---|
| Components | Units | | | | | | |
| PC | % | 91.5 | 56 | 56 | 81.5 | 81.5 | 81.5 |
| Butadiene containing rubber | % | | 35.5 | 35.5 | 10 | | |
| Silocone containing rubber | % | | | | | 10 | |
| Butyl acrylate containing rubber | % | | | | | | 10 |
| CuCr₂O₄ spinel 1 | % | 8 | 8 | 8 | 8 | 8 | 8 |
| Mold release | % | 0.5 | 0.5 | 0.5 | 0.5 | 0.5 | 0.5 |
| Total amount | % | 100 | 100 | 100 | 100 | 100 | 100 |
| Polymerized butadiene content* | % | 0 | 5.8 | 14.5 | 6.5 | 0 | 0 |
| | | | | | | | |

| Properties after about 18 months storage | | | | | | | |
|---|---|---|---|---|---|---|---|
| Moisture after 6 hrs drying at 120°C | % | 0.01 | 0.10 | 0.27 | 0.17 | 0.03 | 0.02 |

| | | | | | | | |
|---|---|---|---|---|---|---|---|
| * Weight percentage relative to total composition | | | | | | | |

**Table 4**

| **Sample** | | **CEx 8** | **CEx 9** | **CEx 10** | **CEx 11** | **CEx 12** | **CEx 13** |
|---|---|---|---|---|---|---|---|
| Components | Units | | | | | | |
| PC | % | 60.8 | 56 | 56 | 56 | 56 | 56 |
| Butadiene containing rubber(s) | % | 38.7 | 35.5 | 35.5 | 35.5 | 35.5 | 35.5 |
| CuCr spinel 1 | % | | 8 | | | | |
| CuCr spinel 2 | % | | | 8 | | | |
| CuCr spinel 3 | % | | | | 8 | | |
| FeMnCu spinel | % | | | | | 8 | |
| ZnFeCr spinel | % | | | | | | 8 |
| Mold release | % | 0.5 | 0.5 | 0.5 | 0.5 | 0.5 | 0.5 |
| Total amount | % | 100 | 100 | 100 | 100 | 100 | 100 |
| Polymerized butadiene content* | % | 9.7 | 9 | 9 | 9 | 9 | 9 |
| | | | | | | | |

| Properties after about 6 months storage | | | | | | | |
|---|---|---|---|---|---|---|---|
| Moisture after 6 hrs drying at 120°C | % | 0.03 | 0.07 | 0.06 | 0.08 | 0.07 | 0.03 |

| | | | | | | | |
|---|---|---|---|---|---|---|---|
| * Weight percentage relative to total composition | | | | | | | |

**Table 5**

| **Sample** | | **CEx 14** | **CEx 15** | **Ex 1** |
|---|---|---|---|---|
| Components | Units | | | |
| PC | % | 60.8 | 56 | 55.9 |
| Butadiene containing rubber(s) | % | 38.7 | 35.5 | 35.4 |
| CuCr spinel 1 | % | | 8 | 8 |
| Anti Oxidant | % | | | 0.2 |
| Mold release | % | 0.5 | 0.5 | 0.5 |
| Total amount | % | 100 | 100 | 100 |
| Polymerized butadiene content* | % | 9.7 | 9 | 9 |
| Antioxidant/ polymerized butadiene weight ratio | | NA | NA | 0.022 |
| | | | | |

| Properties after accelerated conditioninq (7 days at 70°C/62% RH) | | | | |
|---|---|---|---|---|
| Moisture after 6 hrs drying at 100°C | % | 0.02 | 0.06 | 0.01 |

| | | | | |
|---|---|---|---|---|
| * Weight percentage relative to total composition | | | | |

## Claims

1. A thermoplastic composition comprising a butadiene containing polymer and a copper containing laser direct structuring additive, wherein the composition further comprises an antioxidant and the weight ratio of antioxidant to polymerised butadiene is at least 0,01:1.

2. Thermoplastic composition according to claim 1, wherein the weight ratio of antioxidant to polymerised butadiene is at least 0,04:1.

3. Thermoplastic composition according to claim 1 or 2, wherein the weight ratio of antioxidant to polymerised butadiene is at most 1:1.

4. Thermoplastic composition according to anyone of claims 1-3, wherein the composition comprises poybutadiene, acrylonitrile butadiene styrene rubber (ABS) and/or methylmethacrylate butadiene styrene rubber (MBS) as butadiene containing polymer.

5. Thermoplastic composition according to anyone of claims 1-4, wherein the antioxidant is a primary antioxidant or a mixture of primary antioxidants.

6. Thermoplastic composition according to anyone of claims 1-4, wherein the antioxidant is a mixture of at least one primary antioxidant and at least one secondary antioxidant.

7. Thermoplastic composition according to anyone of claims 1-6, wherein the composition comprises a copper containing spinel and/or a copper salt as copper containing laser direct structuring additive.

8. Thermoplastic composition according to anyone of claims 1-7, wherein the composition further comprises a thermoplastic resin.

9. Thermoplastic composition according to claim 8, wherein the composition comprises aromatic polycarbonate as thermoplastic resin.

10. Thermoplastic composition according to anyone of claims 1-9, wherein the composition comprises
a) from 30 to 97 wt.% of thermoplastic resin,
b) from 0,5 to 20 wt.% of laser-direct structuring additive,
c) from 1 to 60 wt.% of butadiene containing polymer, wherein the amounts of a), b) and c) are relative to the total composition.

11. Moulded part that contains the thermoplastic composition according to any one of claims 1-10.

12. Process for producing a moulded part according to claim 11, wherein the process comprises (1) forming the thermoplastic composition according to anyone of claims 1-10 in an extruder to from an extrudate, (2) quenching the extrudate, (3) making granulates of quenched extrudate, (4) storing and/or transporting such granulates whereby water is absorbed into the granulates resulting in water containing granulates, (5) drying such water containing granulates to obtain granulates with a water content acceptable for processing and (6) processing such granulates to obtain parts free of surface streaks that would be caused by the presence of excess moisture in the granulates to be processed.

13. A circuit carrier that contains at least a moulded part according to claim 11.

14. A process for producing a circuit carrier according to claim 13 comprising the steps of providing a moulded part according to claim 12, irradiating areas of said part on which conductive tracks are to be formed with laser radiation to break down the LDS additive b) and releasing metal nuclei, and subsequently metallizing the irradiated areas.

15. Use of an antioxidant in a thermoplastic composition comprising a butadiene containing polymer and a copper containing laser direct structuring additive for increasing the storage time of the composition in a packaging that is not water-tight, while drying of the stored composition still allows to reduce the water content to such an extent that formation of surface streaks, that would be caused by the presence of excess moisture in the composition to be processed, can be avoided.
